# EUROPEAN PATENT SPECIFICATION

(11) **EP 2 668 304 B1**
(45) Date of publication and mention of the grant of the patent: **26.10.2016**
(21) Application number: 12700967.8
(22) Date of filing: 17.01.2012
(51) Int. Cl.: C22B 9/00, C22B 9/16, C22B 61/00, B22D 46/00, C01B 17/02, B22D 37/00, B22D 35/02

(54) **METHOD FOR SOLIDIFYING A MASS OF LIQUID SULFUR AND RELATIVE SOLID SULFUR BLOCK OBTAINABLE WITH SAID METHOD**
VERFAHREN ZUR VERFESTIGUNG EINER MASSE AUS FLÜSSIGEM SCHWEFEL UND ANHAND DIESES VERFAHRENS HERSTELLBARER FESTER SCHWEFELBLOCK
PROCÉDÉ POUR LA SOLIDIFICATION D'UNE MASSE DE SOUFRE LIQUIDE ET BLOC DE SOUFRE SOLIDE ASSOCIÉ POUVANT ÊTRE OBTENU PAR LEDIT PROCÉDÉ

(30) Priority: 25.01.2011 IT MI20110084
(43) Date of publication of application: 04.12.2013
(73) Proprietor: Saipem S.p.A., 20097 San Donato Milanese (Milano) (IT)
(72) Inventor: BASSETTI, Angelo, I-61032 Fano (IT); ARCANGELETTI, Giorgio, I-61037 Marotta (IT); GELONI, Claudio, I-56124 Pisa (IT); CARPITA, Michele, I-61032 Fano (IT); ZAN, Leonardo, I-61032 Fano (IT)
(74) Representative: Croce, Valeria
(86) International application number: PCT/EP2012/050612
(87) International publication number: WO 2012/101002

(56) References cited:
- WO-A1-2008/155790
- WO-A1-2010/022499
- US-A- 3 684 005
- US-A- 3 885 920
- Ralf Steudel ET AL: "Solid Sulfur Allotropes Sulfur Allotropes" In: "Microfluidics", 1 January 2003 (2003-01-01), Springer Berlin Heidelberg, Berlin, Heidelberg, XP055185320, ISSN: 0340-1022 ISBN: 978-3-64-223050-9 vol. 230, pages 1-80, DOI: 10.1007/b12110, * pages 24,25 *

## Description

The present invention relates to a method for solidifying a mass of liquid sulfur and the relative block of sulfur obtainable with said method.

The present invention also relates to portions of solid sulfur which can be obtained by cutting the above blocks.

The presence of sulfur and its compounds in hydrocarbons represents an important technological and environmental problem on a worldwide scale.

The sulfur present in fuels, for example, is mainly responsible for environmental pollution of an anthropic origin associated with sulfur oxides.

Furthermore, the presence of sulfur and its compounds in hydrocarbons is highly undesirable as they poison the catalysts in catalytic transformation processes of hydrocarbons, making them unusable or considerably modifying their activity.

In order to overcome these problems, the hydrocarbons are subjected to a desulfurization process using various technologies.

A consolidated hydrocarbon desulfurization process in the oil industry is the Claus process, in which the sulfur (in an elemental state) is separated from the hydrocarbons in liquid form.

In the state of the art, solidification methods of sulfur, such as the sulfur produced in a Claus process, provide for pouring a plurality of layers of liquid sulfur into specific solidification basins or ponds.

The liquid sulfur poured is left to cool until a layer of solid sulfur is formed on the bottom of the pond. A further mass of liquid sulfur is then poured onto the layer thus solidified, which, in turn, is left to solidify. The pouring-cooling sequence is repeated until a block of solid sulfur is formed, generally in the form of a parallelepiped (stockpile).

The solidification of sulfur according to the methods of the state of the art (see for example WO 2010/022499 A1) is generally effected without any control and monitoring of the operative conditions of the pouring and solidification phases. In particular, the known methods do not envisage the control of process parameters, such as the thickness of the layer of sulfur poured, the volumetric flow-rate of the liquid sulfur introduced into the pond and the cooling conditions of the layers of sulfur.

The mass of solid sulfur accumulated in the stockpile varies in relation to the dimensions of the solidification pond and, in larger deposits, it can even reach various thousands of tons of sulfur.

The blocks of solidified sulfur remain to lie in the solidification ponds even for long periods of time with consequent negative impacts on the surrounding environment. As the sulfur blocks are exposed to adverse weather conditions and the action of the wind, in fact, they are subject to evaporation, erosion and leaching phenomena which lead to the contamination of the air, earth and possible aquifers present in the subsoil.

When market conditions make the sulfur accumulated in the deposits marketable, the blocks of solid sulfur (or a part of them) are re-melted and re-solidified in portions (sizes) having reduced dimensions, adequate for transportation and commercialization (for example, tablets and granules having varying dimensions from a few millimeters to a few centimeters). For this purpose, technologies called *Air Prilling, Rotoforming, Granulation, Wet Forming,* Slating, are used.

The melting of the solid sulfur of the stockpiles and its solidification into portions having dimensions which are more suitable for transportation, is a process which requires a significant energy consumption. Furthermore, the technologies used for this purpose produce huge quantities of powders, increasing the overall environment impact associated with the handling of sulfur.

The melting-solidification process for producing sulfur in portions adequate for transportation and commercialization could be avoided if the sulfur block had mechanical characteristics which were such as to be able to be subjected to cutting processes. The solid sulfur in blocks obtainable with the pouring and solidification processes of the state of the art, however, is quite fragile from a mechanical point of view and they cannot therefore be reduced into portions having reduced dimensions by means of cutting processes.

Furthermore, blocks of solid sulfur having a higher mechanical resistance would have the further advantage of limiting the negative effects of erosion and disgregation phenomena of the stockpiles during storage.

A further disadvantage of the sulfur solidification methods of the state of the art is also that they generate blocks of sulfur having a highly nonhomogeneous crystalline structure, as they are generally composed of a mixture of variable quantities of different allotropic forms (orthorhombic sulfur (S_{α}), monocline sulfur (S_{β}) and amorphous sulfur), see for example Ralf Steudel ET AL: "Solid Sulfur Allotropes Sulfur Allotropes"In: "Microfluidics", 1 January 2003 (2003-01-01), Springer Berlin Heidelberg, Berlin, Heidelberg, XP055185320, ISSN: 0340-1022ISBN: 978-3-64-223050-9vol. 230, pages 1-80, DOI: 10.1007/b12110.

An objective of the present invention is to overcome the disadvantages revealed by the state of the art.

In particular, an objective of the present invention is to find a method for solidifying a mass of liquid sulfur with the formation of blocks of sulfur in the elemental state having an improved mechanical resistance.

A second objective of the present invention is to find a method for solidifying a mass of liquid sulfur which leads to the formation of blocks of elemental sulfur suitable for being reduced into small-dimensioned sizes by means of cutting processes.

A further objective of the present invention is to find a method for solidifying a stream of liquid sulfur which leads to the formation of sulfur having a homogeneous crystalline structure.

An object of the present invention relates to a method for solidifying a mass of liquid sulfur comprising the following operative phases:
(a) pouring a mass of liquid sulfur into a solidification pond and forming a layer of sulfur which spreads over the surface onto which it is poured at a spreading rate ranging from 1 to 10 cm/s, preferably within the range of 1-5 cm/s, and interrupting said pouring when said layer of sulfur has reached a thickness ranging from 5 to 15 cm, preferably from 7.5 to 10 cm;
(b) cooling said layer of sulfur until the temperature of its upper surface is lower than or equal to 65°C, more preferably equal to or lower than 60°C, and forming a block of solid sulfur.

A second object of the present invention relates to a block of solid sulfur which can be obtained from the above method.

A further object of the present invention relates to a multilayer block of solid sulfur which can be obtained by repeating the sequence of phases (a) and (b) of the above method one or more times, in repeating phase (a), the mass of liquid sulfur being poured onto the upper surface of the above block of solid sulfur or onto the upper surface of a multilayer block of solid sulfur obtained after one or more repetitions of said phases (a) and (b).

A further object of the present invention relates to a portion of solid sulfur which can be obtained by cutting the above monolayer or multilayer block of solid sulfur.

The Applicant has observed that the drawbacks revealed by the state of the art can be overcome through a solidification process which provides pouring and cooling a mass of liquid sulfur into a solidification pond under controlled operative conditions. In particular, the pouring of liquid sulfur into the solidification pond is effected by controlling the spreading rate of the liquid mass poured onto the bottom of the pond or onto the surface of a layer of sulfur previously poured and solidified, the thickness of the layer of sulfur formed and the surface temperature of the layer during the cooling.

The method according to the present invention allows to obtain blocks of solid elemental sulfur, consisting of one or more superimposed layers, characterized by a high degree of homogeneity of the crystalline structure.

By applying the method of the present invention, the block of solid sulfur (monolayer or multilayer) obtained at the end of the cooling process mostly consists of microcrystals having an orthorhombic elementary cell (S_{α}), the remaining part consisting of amorphous sulfur. Sulfur having a crystalline structure of the monocline type (S_{β}), on the other hand, is substantially absent.

The sulfur thus obtained, in addition to being in a stable allotropic form (S_{α}), is compact and mechanically resistant. It is therefore suitable for being subjected to subsequent processing, in particular cutting processes, which allow to obtain portions of solid sulfur, having adequate dimensions for transportation and commercialization. The possibility of obtaining portions of solid sulfur having reduced dimensions by the cutting of blocks of solid sulfur not only avoids resort to re-melting-recrystallization processes but also offers a high degree of flexibility in the management of sulfur deposits, as the cutting of the blocks can be effected rapidly and according to necessity.

The above structural characteristics also make the blocks of sulfur obtained with the method of the present invention more resistant to erosion, disgregation and leaching phenomena. The method of the present invention thus makes it possible to reduce the environmental impact of sulfur deposits, in particular the impact of long-period deposits.

For a better understanding of the characteristics of the present invention, reference will be made in the following description to the following figures:
- figure 1, which shows the Differential Scanning Calorimetry (DSC) analysis of a sulfur sample of a multilayer block of solid sulfur according to the present invention;
- figure 2, which shows the X-ray diffractometry analysis of the same sulfur sample to which the DSC analysis of figure 1 refers.

The method of the present invention can be applied for solidifying elemental sulfur in the liquid state, such as the sulfur produced in a Claus desulfurization process of hydrocarbons.

According to the present invention, the solidification of the liquid sulfur is effected by pouring and solidifying one or ore superimposed layers of liquid sulfur in a solidification pond under controlled conditions. Each layer of liquid sulfur poured is left to cool until a suitable temperature value is reached, before proceeding to pour the subsequent liquid mass over the previous solidified layer.

In phase (a) of the method of the present invention, the temperature of the liquid sulfur poured into the solidification pond for forming each of the layers is within the range of 120-130°C.

The mass of liquid sulfur poured into the solidification pond, coming in contact with the bottom of the pond or with the upper surface of a block of solid sulfur previously poured and solidified, forms a layer of liquid sulfur which is spread over the surface available.

For the sake of simplicity, the surface on which the mass of liquid sulfur poured in phase (a) can be spread is also indicated hereunder with the expression "spreading surface".

In phase (a) of the method according to the present invention, the pouring of the mass of liquid sulfur is effected so that the spreading of the layer of liquid sulfur takes place with a rate varying within the range of 1-10 cm/s, preferably within the range of 1 - 5 cm/s (spreading rate).

The pouring of the mass of liquid sulfur is prolonged, without interruption and so as to maintain the above spreading rate, until a layer of liquid sulfur is formed on the spreading surface, having a thickness varying from 5 to 15 cm, preferably from 7.5 to 10 cm.

The spreading rate and thickness of the layer poured can be controlled by regulating the volumetric flow-rate of the mass of liquid sulfur entering the solidification pond. The volumetric flow-rate typically ranges from 25 to 50 m³/h.

Once the preselected value for the thickness of the layer has been reached, the pouring of the mass of liquid sulfur is interrupted and the layer formed on the spreading surface is left to cool (phase (b)) until the formation of a block of solid sulfur.

The layer is cooled until the surface temperature of the block of solid sulfur reaches at least a value equal to or lower than 65°C. The cooling phase (b) is preferably prolonged until the surface temperature of the layer is equal to or lower than 60°C.

In the following description, the temperature reached by the sulfur block at the end of the cooling phase (b) is also indicated with the expression "surface cooling temperature".

For the purposes of the present invention, the expression "solid sulfur" indicates a mass of sulfur having a surface temperature equal to or lower than 65°C.

In the cooling phase (b), the mass of the sulfur layer yields its own heat to the overlying air and walls of the solidification pond.

By allowing the layer of sulfur to cool in the pond due to thermal exchange with the surrounding air, the above surface cooling temperatures are reached in a time varying from 12 to 24 hours.

At the end of phase (b), i.e. when the layer of sulfur deposited has become a block of solid sulfur, the sequence of phases (a) and (b) can be repeated to form a multilayer block of solid sulfur.

In repeating the pouring phase (a), a second mass of liquid sulfur is poured onto the upper surface of the block of solid sulfur (monolayer) present on the bottom of the pond. The second layer poured is then cooled until it too has reached the preselected surface cooling temperature, forming a multilayer block of solid sulfur.

The sequence of phases (a) and (b) can be further repeated, one or more times, pouring a further mass of liquid sulfur onto the upper surface of the multilayer block of solid sulfur obtained at the end of the last repetition of phase (b).

In each repetition, the pouring and cooling phases (a) and (b) are effected under the conditions envisaged by the present invention, i.e. pouring a mass of liquid sulfur which is spread at a spreading rate ranging from 1 to 10 cm/s, preferably from 1 to 5 cm/s, until a layer having a thickness ranging from 5 to 15 cm, preferably from 7.5 to 10 cm, is formed.

When the liquid stream is poured onto a layer of sulfur previously solidified, the heat of the incoming liquid mass causes the fusion of a portion of the upper surface of the underlying layer of sulfur (a few millimetres approximately), favouring the welding of the two layers and the formation of a multilayer block of solid sulfur having a homogeneous crystalline structure.

The method of the present invention is characterized by the particular choice of pouring and cooling operative conditions adopted. In particular, the pouring of the mass of liquid sulfur under controlled operative conditions according to the present invention, allows to cover the spreading surface available with a layer of liquid sulfur having homogeneous thermal and compositional characteristics. Thanks to this homogeneity, in the cooling phase (b), the layer of sulfur solidifies more or less uniformly in all the points of its extension, forming a block of solid sulfur having a crystalline structure substantially of the orthorhombic type (S_{α}) containing only small quantities of amorphous and/or monocline sulfur (S_{β}).

Tipically, in a block of solid sulfur (monolayer or multilayer) obtained with the method of the present invention, the orthorhombic sulfur is present in a quantity equal to or higher than 99% by weight, whereas the sum of the quantities of amorphous sulfur and monocline sulfur (S_{β}) is equal to or lower than 1% by weight (weight percentages referring to the overall weight of the block).

The particular composition of the blocks of solidified elemental sulfur which can be obtained with the method of the present invention, imparts a greater mechanical resistance to said blocks, which facilitates the subsequent transformation operations into portions having reduced dimensions, more suitable for transportation and commercialization. The blocks of sulfur, object of the present invention, can for example be reduced to portions having a volume ranging from 0.125 m³ (for example a cube with a side equal to 50 cm) to 8 m³ (for example a cube with a side equal to 2 m) by simply cutting the blocks, avoiding the inconveniences of the state of the art and without having to resort to the melting-solidification technique.

The method of the present invention can be effected with devices commonly used in solidification methods of liquid sulfur known in the state of the art.

The liquid sulfur to be subjected to the solidification method of the present invention is generally stored in liquid form in specific heated storage tanks situated close to the solidification pond. The liquid sulfur is moved from and towards the storage tanks by means of appropriate pumping systems.

In a preferred embodiment of the present invention, the solidification pond is made of concrete. This type of pond in fact allows the collection of possible leaching water, which can be collected, suitably treated and finally disposed of in safety, avoiding pollution of the soil and underground aquifers.

The pouring of the mass of liquid sulfur into the pond can be effected by means of a distribution system equipped with one or more movable arms, each having a discharge opening which allows the liquid sulfur to be distributed over the spreading surface. The outgoing direction of the liquid sulfur from the discharge opening is substantially perpendicular to the spreading surface. The spreading of the liquid sulfur mass and formation of the relative layer therefore substantially takes place in a radial direction starting from the contact point (inlet point) of the liquid mass with the spreading surface.

The stream of liquid sulfur is poured, preferably in free fall, into the pond preferably through a plurality of movable arms. By pouring the mass of liquid sulfur into the pond through a plurality of discharge openings suitably positioned, preferably having a diameter ranging from 2 to 6" and positioned at a height ranging from 1.5 to 2.5 m, which operate contemporaneously, it is possible to form blocks of solid sulfur (monolayer or multilayer) also having large dimensions.

For effecting the method of the present invention using a plurality of discharge openings contemporaneously, the inlet point of the liquid mass introduced by means of the relative discharge opening must be at a distance from the inlet point immediately adjacent to it, which is such as to guarantee a completely homogeneous and uniform spreading of the liquid mass injected. The distance between two immediately adjacent inlet points is within the range of 20 to 40 m and varies in relation to the volumetric injection flow-rate. The distance is preferably within the range of 27-32 m. The effectiveness of the above distance ranges between two immediately adjacent inlet points was determined by calibrations based on non-isotherm fluid-dynamic numerical models.

Under the operative pouring conditions according to the present invention, the above distance guarantees that the mass of liquid sulfur which is spread starting from the first inlet point, has uniform thermal and compositional characteristics and that these characteristics are kept substantially unaltered until the above mass being distributed encounters the mass of liquid sulfur, having the same thermal and compositional characteristics, which spreads starting from the second inlet point. The contact point of two spreading masses starting from two immediately adjacent inlet points is approximately at a distance halfway between them.

The surface temperature of the layer of liquid sulfur poured into the basin can be measured with devices known to experts in the field. The surface temperature is preferably measured by means of a system of infrared-ray thermal chambers, so as to allow a more accurate determination of the duration of the pouring-cooling sequence phases of the method of the present invention.

The following embodiment example is provided for purely illustrative purposes of the present invention and should not be considered as limiting the protection scope defined by the enclosed claims.

### EXAMPLE

The effectiveness of the present invention was verified by simulations with numerical models under both static and non-isotherm fluid-dynamic conditions. The thermal properties and physical-chemical parameters of the sulfur (specific heat at a *constant pressure* (cₚ), density, enthalpy of fusion (ΔH), melting point, viscosity, surface tension) to be used in the simulations were determined using solidification and cooling models suitable for reproducing the succession of sulfur pourings for the construction of a cubic block having a side of 2 m.

The numerical results of the determination of the thermal properties and physico-chemical parameters were compared with the data obtained in an experimental cooling test of a mass of liquid sulfur with the formation of a multilayer block of solid sulfur effected as follows.

At the end of the pouring and cooling of a first layer of sulfur, a second layer of sulfur was poured, under the same operative conditions as the first, onto the upper surface of the first layer of solid sulfur formed. The pouring and cooling sequence was repeated until a multilayer block of sulfur having a height equal to 2 m was obtained.

In order to define the optimum parameters for implementing the method of the present invention, a double sensitivity analysis was carried out on both the thickness of the single layer poured, with values ranging from 2 to 10 cm, and also on the cooling times.

The optimum operative conditions for effecting the method of the present invention which emerged from the sensitivity analysis are: thickness of the layer of liquid sulfur ranging from 5 to 10 cm; cooling time of 18 h. Under these conditions, temperatures of over 65°C are never reached for layers formed in the pouring operations.

The parameters obtained from the sensitivity analysis were used in a subsequent non-isotherm fluid-dynamic modellistic phase for fluids with a free surface in order to analyze the spreading dynamics of the single layer (optimization of the distance between two immediately adjacent discharge openings) with both stationary and transitory models.

The modelling activity was focalized on the injection of a stream of liquid sulfur at 130°C through a single discharge opening with a flow-rate of 25 m³/h, considering spreading domains of the liquid sulfur of the radial type and with a radius of 25 m. With this analysis, an analytical expression of the spreading rate was obtained, in relation to the spreading radius with an asymptotic trend towards a minimum of 1-2 cm/s.

The sulfur of the multilayer solid block obtained as described above was subjected to differential scanning calorimetric analysis (DSC) and X-ray diffractometric analysis.

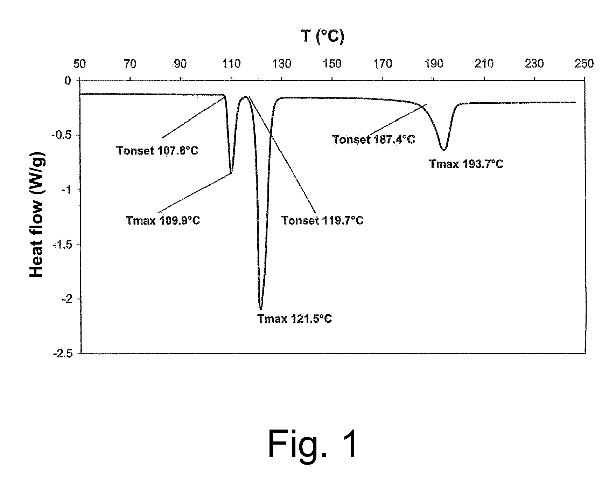

The DSC analysis (figure 1) showed a shift of the peak relating to the allotropic phase transition S_{α} → Sp from 121.5°C to 109.9 °C (about -12°C). This shift indicates the presence of crystals having a substantially orthorhombic structure together with small quantities of amorphous sulfur. The presence of amorphous sulfur was confirmed by scanning electron microscopy analysis (not shown).

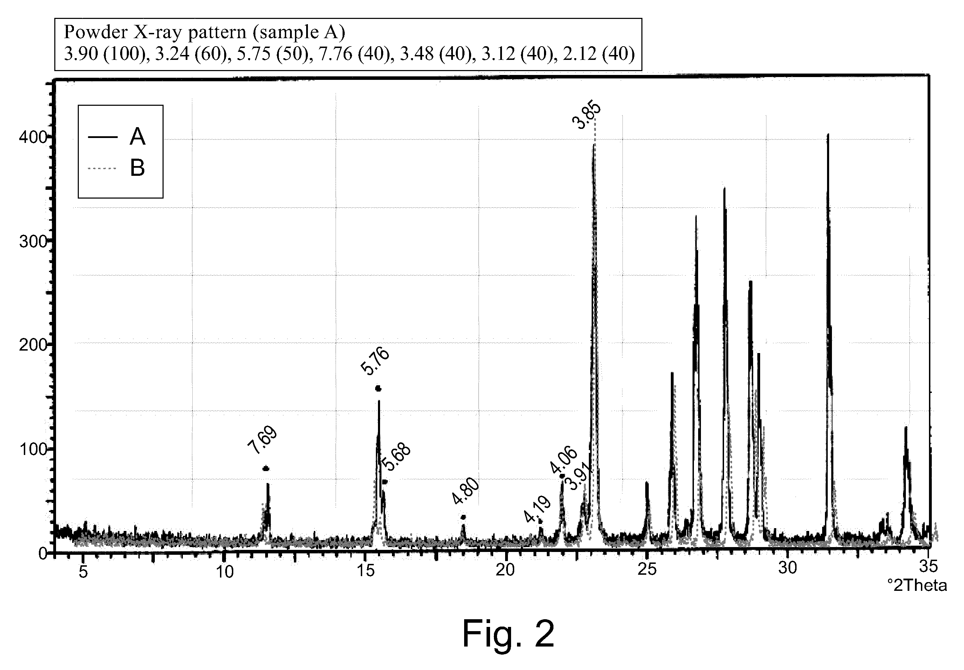

The prevalently orthorhombic structure of the sulfur obtained with the method of the present invention was confirmed by X-ray diffractometric analysis (figure 2 - Sample A). Figure 2 shows that the spectrum of the sulfur sample analyzed substantially coincides with the spectrum of a reference sample (Sample B) consisting of a synthetic orthorhombic sulfur powder.

The above experimental results confirm that the crystalline characteristics of the sulfur obtained with the solidification process of the present invention, in particular the substantial absence of allotropic transitions S_{α} → Sp and the small quantities of amorphous sulfur present, make the solidified sulfur suitable for being transformed into pieces having reduced dimensions by means of cutting operations.

## Claims

1. A method for solidifying a mass of liquid sulfur comprising the following operative phases:
(a) pouring a mass of liquid sulfur into a solidification basin and forming a layer of sulfur which spreads over the surface onto which it is poured at a spreading rate ranging from 1 to 10 cm/s, preferably from 1 to 5 cm/s, and interrupting said pouring when said layer of sulfur has reached a thickness ranging from 5 to 15 cm, preferably from 7.5 to 10 cm;
(b) cooling said layer of sulfur until the temperature of its upper surface is lower than or equal to 65°C, more preferably equal to or lower than 60°C, and forming a block of solid sulfur.

2. The method according to claim 1, **characterized in that** said sequence of phases (a) and (b) is repeated once or various times with the formation of a multilayer block of solid sulfur, in said repetition, the mass of liquid sulfur being poured onto the upper surface of said block of solid sulfur or onto the upper surface of a multilayer block of solid sulfur obtained at the end of the last repetition of said phases (a) and (b).

3. The method according to any of the previous claims, **characterized in that** said mass of liquid sulfur is poured into the basin at a volumetric flow-rate ranging from 25 to 50 m³/h.

4. The method according to any of the previous claims, **characterized in that** said cooling phase (b) has a duration varying from 12 hours to 24 hours.

5. The method according to any of the previous claims, **characterized in that** said mass of liquid sulfur is poured into the basin through a plurality of discharge openings operating contemporaneously.

6. The method according to the previous claim, **characterized in that** the discharge openings have a diameter ranging from 5.08-15.24 cm (2 to 6") and are positioned at a height ranging from 1.5 to 2.5 m.

7. The method according to claim 5 or 6, **characterized in that** the inlet point of the liquid mass introduced into the solidification basin by means of a first discharge opening is at a distance from the inlet point, immediately adjacent to it, of the liquid mass introduced by means of a second discharge opening, of 20 to 40 m, preferably from 27 to 32 m.

8. The method according to any of the previous claims, **characterized in that** said phase (b) is effected by means of thermal exchange between said layer of liquid sulfur poured in said phase (a) and the surrounding air.

9. A block of solid sulfur prepared by the method according to claim 1, **characterized in that** it comprises:
- orthorhombic crystalline sulfur (S_{α}) in an amount higher than or equal to 99% by weight;
- amorphous sulfur and monoclinic sulfur (Sβ) in an overall amount equal to or lower than 1% by weight, said weight percentages referring to the overall weight of said block, and **in that** it has a thickness ranging from 5 to 15 cm, preferably from 7.5 to 10 cm.

10. A multilayer block of solid sulfur prepared by repeating the sequences of phases (a) and (b) of the method according to claim 1, once or various times, in the repetition of phase (a), the mass of liquid sulfur being poured onto the upper surface of said block of solid sulfur or onto the upper surface of a multilayer block of solid sulfur obtained after one or more repetitions of said phases (a) and (b) **characterized in that** said block of solid sulfur is defined as in claim 9.

11. A portion of solid sulfur prepared by cutting a block of solid sulfur according to claim 9 or 10.

## Patentansprüche

1. Verfahren zum Verfestigen einer Masse aus flüssigem Schwefel, umfassend die folgenden Betriebsphasen:
(a) Gießen einer Masse aus flüssigem Schwefel in ein Verfestigungsbecken und Bilden einer Schicht aus Schwefel, die sich über die Oberfläche ausbreitet, auf welche sie gegossen wird, mit einer Ausbreitungsrate von 1 bis 10 cm/s, vorzugsweise von 1 bis 5 cm/s, und Unterbrechen des Gießens wenn die Schicht aus Schwefel eine Dicke im Bereich von 5 bis 15 cm, vorzugsweise von 7,5 bis 10 cm, erreicht hat;
(b) Kühlen der Schicht aus Schwefel bis die Temperatur ihrer oberen Oberfläche kleiner oder gleich 65 °C, mehr bevorzugt gleich oder kleiner 60 °C, ist, und Bilden eines Blocks aus festem Schwefel.

2. Verfahren nach Anspruch 1, **dadurch gekennzeichnet, dass** die Sequenz der Phasen (a) und (b) einmal oder mehrmals wiederholt wird, unter Bildung eines mehrschichtigen Blocks aus festem Schwefel, wobei bei der Wiederholung die Masse aus flüssigem Schwefel auf die obere Oberfläche des Blocks aus festem Schwefel oder auf die obere Oberfläche eines mehrschichtigen Blocks aus festem Schwefel, erhalten am Ende der letzten Wiederholung der Phasen (a) und (b), gegossen wird.

3. Verfahren nach einem der vorhergehenden Ansprüche, **dadurch gekennzeichnet, dass** die Masse aus flüssigem Schwefel in das Becken mit einem Volumenstrom von 25 bis 50 m³/h gegossen wird.

4. Verfahren nach einem der vorhergehenden Ansprüche, **dadurch gekennzeichnet, dass** die Kühlphase (b) eine Zeitdauer von 12 Stunden bis 24 Stunden hat.

5. Verfahren nach einem der vorhergehenden Ansprüche, **dadurch gekennzeichnet, dass** die Masse aus flüssigem Schwefel in das Becken über mehrere gleichzeitig in Betrieb befindliche Auslauföffnungen gegossen wird.

6. Verfahren nach dem vorhergehenden Anspruch, **dadurch gekennzeichnet, dass** die Auslauföffnungen einen Durchmesser im Bereich von 5,08 - 15,24 cm (2 bis 6 Zoll) haben und in einer Höhe im Bereich von 1,5 bis 2,5 m positioniert sind.

7. Verfahren nach Anspruch 5 oder 6, **dadurch gekennzeichnet, dass** der Einlaufpunkt der flüssigen Masse, die in das Verfestigungsbecken mittels einer ersten Auslauföffnung eingeleitet wird, in einem Abstand ist von dem Einlaufpunkt, der unmittelbar zu ihm benachbart ist, der flüssigen Masse, die mittels einer zweiten Zulauföffnung zugeleitet wird, von 20 bis 40 m, vorzugsweise von 27 bis 32 m.

8. Verfahren nach einem der vorhergehenden Ansprüche, **dadurch gekennzeichnet, dass** die Phase (b) mittels eines thermischen Austauschs der in Phase (a) gegossenen Schicht aus flüssigem Schwefel und der Umgebungsluft erfolgt.

9. Block aus festem Schwefel, hergestellt durch das Verfahren nach Anspruch 1, **dadurch gekennzeichnet, dass** er umfasst:
- orthorhombischen kristallinen Schwefel (S_{α}), in einer Menge von größer oder gleich 99 Gew.-%;
- amorphen Schwefel und monoklinen Schwefel (Sβ) in einer Gesamtmenge von gleich oder kleiner 1 Gew.-%, wobei sich die Gewichtsprozentanteile auf das Gesamtgewicht des Blocks beziehen,
und dadurch, dass er eine Dicke im Bereich von 5 bis 15 cm, vorzugsweise von 7,5 bis 10 cm aufweist.

10. Mehrschichtiger Block aus festem Schwefel, hergestellt durch Wiederholung der Sequenzen der Phasen (a) und (b) des Verfahrens nach Anspruch 1, einmal oder mehrmals, wobei bei der Wiederholung von Phase (a) die Masse aus flüssigem Schwefel auf die obere Oberfläche des Blocks aus festem Schwefel oder auf die obere Oberfläche des mehrschichtigen Blocks aus festem Schwefel, erhalten nach einer oder mehreren Wiederholungen der Phasen (a) und (b), gegossen wird, **dadurch gekennzeichnet, dass** der Block aus festem Schwefel wie in Anspruch 9 definiert ist.

11. Teil aus festem Schwefel, hergestellt durch Schneiden eines Blocks aus festem Schwefel nach Anspruch 9 oder 10.

## Revendications

1. Procédé pour la solidification d'une masse de soufre liquide comprenant les phases opérationnelles suivantes : (a) versage d'une masse de soufre liquide dans un bassin de solidification et formation d'une couche de soufre qui s'étale sur la surface sur laquelle elle est versée à un rendement en surface compris entre 1 et 10 cm/s, de préférence entre 1 et 5 cm/s, et l'interruption dudit versage lorsque ladite couche de soufre a atteint une épaisseur comprise entre 5 et 15 cm, de préférence entre 7,5 et 10 cm ; (b) refroidissement de ladite couche de soufre jusqu'à ce que la température de sa surface supérieure soit inférieure ou égale à 65 °C, de préférence inférieure ou égale à 60 °C et formation d'un bloc de soufre solide.

2. Procédé selon la revendication 1, **caractérisé en ce que** ladite séquence des phases (a) et (b) est répétée une ou plusieurs fois avec la formation d'un bloc multicouche de soufre solide, au cours de ladite répétition, la masse de soufre liquide étant versée sur la surface supérieure dudit bloc de soufre solide ou sur la surface supérieure d'un bloc multicouche de soufre solide obtenu à la fin de la dernière répétition desdites phases (a) et (b).

3. Procédé selon l'une quelconque des revendications précédentes, **caractérisé en ce que** ladite masse de soufre liquide est versée dans le bassin à un débit volumétrique compris entre 25 et 50 m³/h.

4. Procédé selon l'une quelconque des revendications précédentes, **caractérisé en ce que** ladite phase de refroidissement (b) a une durée variant entre 12 et 24 heures.

5. Procédé selon l'une quelconque des revendications précédentes, **caractérisé en ce que** ladite masse de soufre liquide est versée dans le bassin par une pluralité d'ouvertures d'évacuation fonctionnant de façon simultanée.

6. Procédé selon la revendication précédente, **caractérisé en ce que** les ouvertures d'évacuation ont un diamètre compris entre 5,08 et 15,24 cm (entre 2 et 6 pouces) et sont positionnées à une hauteur comprise entre 1,5 et 2,5 m.

7. Procédé selon la revendication 5 ou 6, **caractérisé en ce que** le point d'entrée de la masse liquide introduite dans le bassin de solidification au moyen d'une première ouverture d'évacuation se trouve à une distance du point d'entrée, immédiatement adjacent à celle-ci, de la masse liquide introduite au moyen d'une seconde ouverture d'évacuation, comprise entre 20 et 40 m, de préférence entre 27 et 32 m.

8. Procédé selon l'une quelconque des revendications précédentes, **caractérisé en ce que** ladite phase (b) est effectuée au moyen d'un échange de chaleur entre ladite couche de soufre liquide versée au cours de ladite phase (a) et l'air environnant.

9. Bloc de soufre solide préparé par le procédé selon la revendication 1, **caractérisé en ce qu'**il comprend :
- du soufre cristallin orthorhombique (S_{α}) dans une quantité supérieure ou égale à 99 % en poids ;
- du soufre amorphe et du soufre monoclinique (Sβ) dans une quantité globale inférieure ou égale à 1 % en poids, lesdits pourcentages de poids faisant référence au poids global dudit bloc, et **en ce qu'**il a une épaisseur comprise entre 5 et 15 cm, de préférence entre 7,5 et 10 cm.

10. Bloc multicouche de soufre solide préparé en répétant les séquences de phases (a) et (b) du procédé selon la revendication 1, une ou plusieurs fois, pendant la répétition de la phase (a), la masse de soufre liquide étant versée sur la surface supérieure dudit bloc de soufre solide ou sur la surface supérieure d'un bloc multicouche de soufre solide obtenu après une ou plusieurs répétitions desdites phases (a) et (b) **caractérisé en ce que** ledit bloc de soufre solide est défini selon la revendication 9.

11. Partie de soufre solide préparée en découpant un bloc de soufre solide selon la revendication 9 ou 10.
